# EUROPÄISCHE PATENTSCHRIFT

(11) **EP 1 493 949 B1**
(45) Veröffentlichungstag und Bekanntmachung des Hinweises auf die Patenterteilung: **05.05.2010**
(21) Anmeldenummer: 04007758.8
(22) Anmeldetag: 31.03.2004
(51) Int. Cl.: F16J 15/32

(54) **Dichtung**
Sealing
Joint d'étanchéité

(30) Priorität: 03.07.2003 DE 10329893
(43) Veröffentlichungstag der Anmeldung: 05.01.2005
(73) Patentinhaber: Carl Freudenberg KG, 69469 Weinheim (DE)
(72) Erfinder: Barillas, Gonzalo, 36304 Alsfeld-Altenburg (DE); Kinsch, Patrick, 34590 Wabern (DE)

(56) Entgegenhaltungen:
- CH-A- 349 844
- GB-A- 560 515
- US-A- 2 402 114

## Beschreibung

### Technisches Gebiet

Die Erfindung betrifft eine Dichtung, umfassend einen im Wesentlichen T-förmigen Stützkörper aus zähhartem Werkstoff mit einem sich in radialer Richtung erstreckenden Stützschenkel und einen kongruent gestalteten Dichtring aus elastomerem Werkstoff, der den Stützschenkel anliegend umschließt und auf der dem Stützkörper radial abgewandten Seite zumindest eine dynamisch beanspruchte Dichtlippe aufweist.

### Stand der Technik

Eine solche Dichtung ist jeweils aus der CH 349 844 A, der GB 560 515 A und der US-A-2 402 114 bekannt.
Der elastomere Werkstoff des Dichtrings und der zähharte Werkstoff, aus dem der Stützkörper besteht, sind bei den zuvor genannten Dichtungen jeweils gebunden, das heißt stoffschlüssig aneinander festgelegt. Durch die stoffschlüssige Verbindung von Dichtring und Stützkörper ist die radiale Beweglichkeit der Dichtlippen unerwünscht eingeschränkt. Herstellungs- und/oder montagebedingte Toleranzen der Dichtung und/oder der Maschinenelemente, zwischen denen die Dichtung eingebaut ist sowie Druckstöße, die auf die Dichtung wirken, führen zu einer unerwünscht hohen Anpressung der Dichtlippe an die abzudichtende Fläche. Die daraus resultierende unerwünscht hohe Reibung führt zu einem erhöhten Verschleiß der Dichtlippen und kann zu einem vorzeitigen Ausfall der Dichtung führen.

Eine weitere Dichtung ist aus der DE 71 47 504 U1 bekannt. Die vorbekannte Dichtung umfasst einen elastischen Anpressring und einen Dichtring, der beispielsweise aus PTFE besteht, wobei der Anpressring mindestens einen Nocken aufweist, der in mindestens einer entsprechend gestalteten Ausnehmung des Dichtrings angeordnet ist; der Nocken und die Ausnehmung sind kongruent gestaltet, wobei der Nocken die Form eines Kegelstumpfs aufweist. Die vorbekannte Dichtung gelangt zur Abdichtung drehender oder schwenkender Wellen zur Anwendung, wobei hohe Drücke abzudichten sind.

### Darstellung der Erfindung

Der Erfindung liegt die Aufgabe zu Grunde, eine Dichtung derart weiter zu entwickeln, dass ein aus einem elastomeren Werkstoff bestehender Dichtring durch einen Stützring vor unerwünscht großen mechanischen Belastungen und/oder Verformungen geschützt wird und dass herstellungs- und/oder montagebedingte Toleranzen der Dichtung und/oder der Maschinenelemente, zwischen denen die Dichtung eingebaut ist, und Druckstöße, die auf die Dichtung wirken, besser ausgeglichen werden. Außerdem soll die Beweglichkeit der Dichtlippen in radialer Richtung verbessert werden.

Diese Aufgabe wird durch eine Dichtung gemäß Anspruch 1 und eine Dichtungsanordnung gemäß Anspruch 11 gelöst. Auf vorteilhafte Ausgestaltungen nehmen die Unteransprüche Bezug.

Zur Lösung der Aufgabe ist eine Dichtung vorgesehen, bei der der Stützkörper und der Dichtring ungebunden kraft- und/oder formschlüssig miteinander verbunden sind. Durch den Stützschenkel wird der Dichtring, im Wesentlichen in axialer Richtung, gestützt. Unerwünscht große Verformungen und/oder ein Ausweichen des Dichtrings, im Wesentlichen in axialer Richtung, werden dadurch verhindert. Der Stützschenkel weist bevorzugt eine Erstreckung in radialer Richtung auf, die nahezu der gesamten radialen Erstreckung des Dichtrings entspricht. Bei Druckstößen aus den gegeneinander abzudichtenden Räumen, wird die aus den Druckstößen resultierende Kraft zum überwiegenden Teil vom Stützschenkel aufgenommen.

Der Stützkörper und der Dichtring sind ungebunden miteinander verbunden. Diese ungebundene Festlegung von Stützkörper und Dichtring aneinander kann beispielsweise durch Formschluss und/oder kraftschlüssig erfolgen. Die Dichtlippen sind durch eine solche Ausgestaltung insbesondere auch in radialer Richtung leicht beweglich, da keine stoffschlüssige Bindung zwischen dem Stützkörper und dem Dichtring vorliegt. Durch die ausgezeichnete radiale Beweglichkeit der Dichtlippen ist eine geringe Anpressung der Dichtlippen an die abzudichtende Fläche und daraus resultierend eine geringe Reibung bedingt. Insbesondere in Verbindung mit dem mit einem Schmiermittel gefüllten Schmiermitteldepot werden auch bei Beaufschlagung der Dichtung mit großen Drücken stick-slip-Effekte und Verschleiß der Dichtlippen auf eine Minimum reduziert. Die ungebundene Festlegung des Dichtrings am Stützkörper sorgt für einen guten Ausgleich von Druckstößen sowie herstellungs- und montagebedingter Toleranzen. Außerdem ist die Dichtung dadurch einfach und kostengünstig herstellbar.

Der Stützkörper wird bevorzugt an einem angrenzenden Maschinenelement in seiner Position durch Presssitz gehalten.

Der Dichtring kann, im Längsschnitt betrachtet, axial beiderseits des Stützschenkels jeweils eine Dichtlippe aufweisen, die von einer abzudichtenden Fläche eines dynamisch abzudichtenden ersten Maschinenelements dichtend berührbar sind. Das erste Maschinenelement kann dabei durch einen Ventilschieber gebildet sein, der innerhalb eines Ventilgehäuses in axialer Richtung hin- und herbewegbar ist. Die Dichtlippen umschließen das abzudichtende erste Maschinenelement dichtend. Der Dichtring ist axial beiderseits druckbeaufschlagbar. Der Stützschenkel verhindert eine unerwünscht große mechanische Verformung und/oder ein Ausweichen des elastomeren Dichtrings und seiner Dichtlippen und gewährleistet dadurch auch bei Beaufschlagung der Dichtung mit Druckstößen ein sehr gutes Abdichtungsergebnis während einer langen Gebrauchsdauer. Der Stützkörper ist so ausgelegt, dass die Position der Dichtung im Maschinenelement durch Presssitz gehalten wird.

Die Dichtlippen können einander mit axialem Abstand benachbart zugeordnet sein, wobei der durch den Abstand gebildete Spalte als Schmiermitteldepot ausgebildet ist. Das Schmiermitteldepot wir einerseits durch den Dichtring und seine beiden Dichtlippen begrenzt und andererseits durch die Oberfläche des dynamisch abzudichtenden ersten Maschinenelements. Bei axialer Hin- und Herbewegung des ersten Maschinenelements, bezogen auf die beiden Dichtlippen, werden die Dichtlippen durch das im Schmiermitteldepot befindliche Schmiermittel, beispielsweise ein Schmierfett, geschmiert. Dadurch bleiben die Dichtlippen elastisch und der reibungsbedingte abrasive Verschleiß, dem die Dichtung während ihres Gebrauchs unterliegt, ist auf ein Minimum begrenzt.

Der Stützschenkel kann, im Längsschnitt betrachtet, im Wesentlichen Ω-förmig ausgebildet sein. Durch die Ω-förmige Gestalt des Stützschenkels ist der Dichtring auf diesen aufschnappbar; der Dichtring schnappt klammerförmig hinter den Hinterschneidungen des Ω-förmigen Stützschenkels ein.

Der Stützschenkel kann sich in axialer Richtung erstreckende Ausnehmungen aufweise, die in Umfangsrichtung verteilt angeordnet sind. Bevorzugt sind die Ausnehmungen gleichmäßig in Umfangsrichtung verteilt angeordnet. Die Ausnehmungen werden durch die elastische Vorspannung, mit der Dichtring den Stützschenkel umschließt, zumindest teilweise mit dem elastomerem Werkstoff ausgefüllt. Dadurch ergibt sich eine mechanische Verkrallung des Dichtrings mit dem Stützschenkel, so dass eine unzulässig hohe Verschiebung von Stützkörper und Dichtring, relativ zueinander, vermieden wird.

Alternativ oder zusätzlich besteht die Möglichkeit, dass der Stützschenkel zumindest teilweise von einer Oberflächenprofilierung überdeckt ist. Die Oberflächenprofilierung und die dem Stützschenkel zugewandte Oberfläche des elastomeren Dichtrings verkrallen sich dadurch miteinander, so dass eine unzulässig hohe Relatiwerschiebung zwischen Stützschenkel und Dichtring vermieden wird. Bei Unterdruck wird vermieden, dass der Dichtring sich vom Stützschenkel löst.

Die zuvor beschriebene Beweglichkeit der Dichtlippen in radialer Richtung wird durch die Ausnehmungen und/oder die Oberflächenprofilierung kaum beeinträchtigt; im Gegensatz zu einer stoffschlüssigen Verbindung zwischen Stützschenkel und Dichtring werden die zuvor beschriebenen Vorteile weiterhin nahezu unverändert erreicht.

Nach einer ersten Ausgestaltung kann der Stützkörper den Dichtring radial außenseitig umschließen. Bei einer solchen Ausgestaltung handelt es sich um eine dynamisch innen dichtende Variante. Der Dichtring ist mittels seines Stützkörpers in ein Gehäuse eingepresst und umschließt das erste Maschinenelement dichtend.

Nach einer zweiten Ausgestaltung kann der Stützkörper radial außenseitig vom Dichtring umschlossen sein. Bei einer solchen Ausgestaltung handelt es sich um eine dynamisch außen dichtende Variante. Der Dichtring ist mittels seines Stützrings beispielsweise auf einen in axialer Richtung hin- und herbeweglichen Ventilschieber gepresst und dichtet mit seinen Dichtlippen an einem Ventilgehäuse ab.

Die Montage der Dichtung in den radialen Dichtspalt zwischen zwei Maschinenelementen wird wesentlich vereinfacht, wenn die Dichtung, bezogen auf eine axial mittig angeordnete gedachte Radialebene, symmetrisch ausgebildet ist. Der mit der Montage der Dichtung betraute Monteur oder ein Montageautomat muss bei einer solchen Dichtung nicht darauf achten, in welcher Richtung er die Dichtung einbaut. Montagefehler sind daher auf ein Minimum reduziert.

Der Stützkörper kann auf der dem Dichtring radial abgewandten Seite eine erste Profilierung aufweisen, die formschlüssig mit einer kongruent gestalteten zweiten Profilierung eines die Dichtung aufnehmenden zweiten Maschinenelements in Eingriff bringbar ist. Durch die formschlüssig ineinander eingreifenden Profilierungen ist eine Art Schnappverbindung hergestellt, die insbesondere dann sinnvoll ist, wenn die Dichtungsanordnung einschließlich der Dichtung großen Temperaturschwankungen und/oder großen Druckimpulsen aus den gegeneinander abzudichtenden Räumen ausgesetzt ist. Der Stützkörper der gebrauchsfertigen Dichtung kann in die Bohrung des zweiten Maschinenelements eingepresst werden.

Die formschlüsige Verbindung durch erste und zweite Profilierung kann auch als Positionierungseinrichtung genutzt werden. Sobald der Stützkörper mit seiner ersten Profilierung in die kongruent gestaltete zweite Profilierung des zweiten Maschinenelements einrastet, ist die korrekte Position der Dichtung, bezogen auf das zweite Maschinenelement, erreicht.

Außerdem betrifft die Erfindung eine Dichtungsanordnung, umfassend eine Dichtung, wie zuvor beschrieben, zur Abdichtung eines radialen Dichtspalts zwischen dem ersten und zweiten Maschinenelement, wobei der Stützkörper und das zweite Maschinenelement durch eine Presspassung verbunden sind.

Verwendung findet die zuvor beschriebene Dichtung bevorzugt als Ventildichtung für Wegeventile.

### Kurzbeschreibung der Zeichnung

Drei Ausführungsbeispiele werden nachfolgend anhand der Figuren 1 bis 3 näher beschrieben. Diese zeigen jeweils in schematischer Darstellung:
- Fig. 1: ein erstes Ausführungsbeispiel der beanspruchten Dichtung/Dichtungsanordnung, innen dichtende Variante,
- Fig. 2: ein zweites Ausführungsbeispiel, außen dichtende Variante,
- Fig. 3: ein drittes Ausführungsbeispiel, innen dichtende Variante, ähnlich wie Fig. 1, jedoch mit abweichend gestaltetem Stützkörper.

### Ausführung der Erfindung

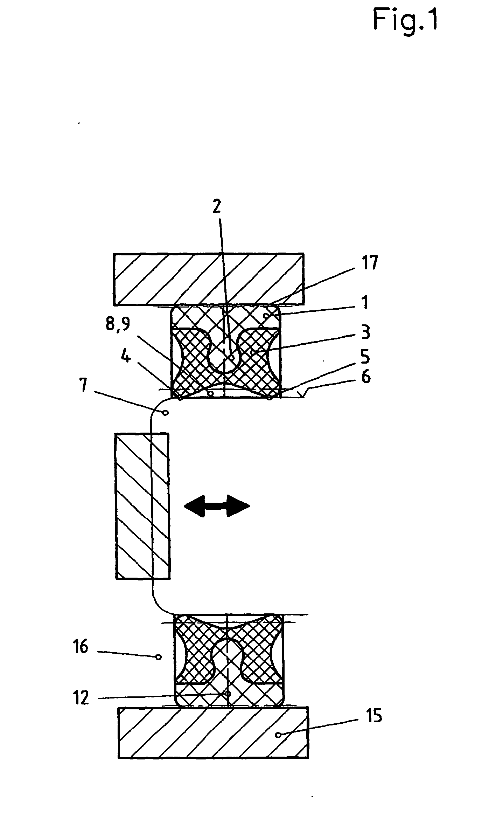

In den Figuren 1 bis 3 ist jeweils eine Dichtung gezeigt, die aus einem im Wesentlichen T-förmigen Stützkörper 1 und einem Dichtring 3 besteht. Der Stützkörper 1 besteht in den hier gezeigten Ausführungsbeispielen aus einem metallischen oder polymeren Werkstoff. Der Dichtring 3 besteht aus einem elastomeren Werkstoff.

Der Stützkörper 1 weist einen sich in radialer Richtung erstreckenden Stützschenkel 2 auf, der einen einstückigen und materialeinheitlichen Bestandteil des Stützkörpers 1 bildet. Der Dichtring 3 ist kongruent zum Stützschenkel 2 gestaltet und umschließt dessen freies Ende anliegend.

In den hier gezeigten Ausführungsbeispielen weist der Dichtring 3, im Längsschnitt betrachtet, axial beiderseits des Stützschenkels 2 jeweils eine Dichtlippe 4, 5 auf, die an der abzudichtenden Fläche 6 des in radialer Richtung angrenzenden ersten Maschinenelements 7 dichtend anliegt.

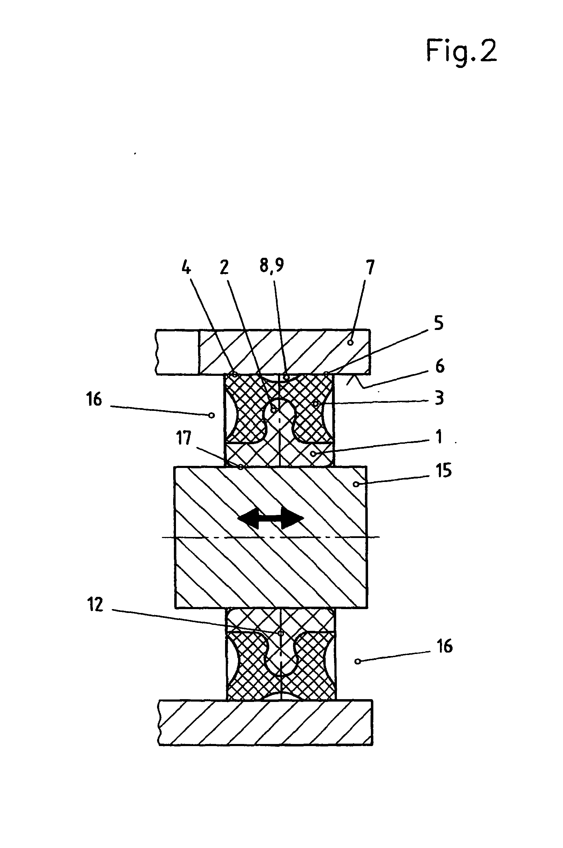

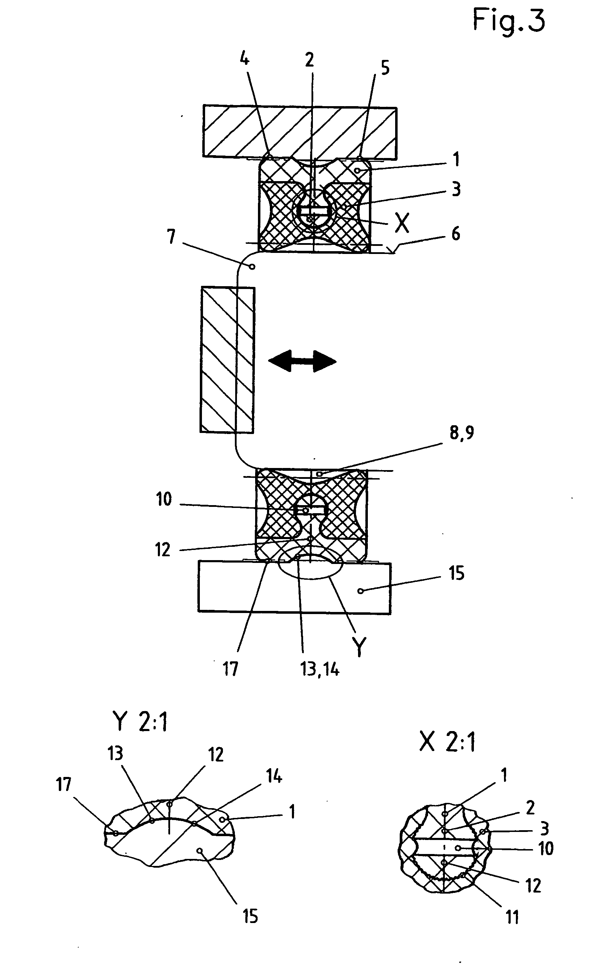

Das dynamisch abzudichtende erste Maschinenelement 7 ist in den Fig. 1 und 3 jeweils von einem Ventilschieber, in Fig. 2 von einem Ventilgehäuse gebildet. Mit dem ersten Maschinenelement 7 begrenzen die Dichtlippen 4, 5 ein mit einem Schmiermittel gefülltes Schmiermitteldepot 9, das durch den Spalt 8 zwischen den beiden Dichtlippen 4, 5 gebildet ist.

In allen hier gezeigten Ausführungsbeispielen sind der Stützkörper 1 und der Dichtring 3 ungebunden aneinander festgelegt. Die Festlegung erfolgt durch Form- und/oder Kraftschluss; stoffschlüssig verbunden sind Stützkörper 1 und Dichtring 3 nicht.

In allen Ausführungsbeispielen ist der Stützschenkel 2, im hier gezeigten Längsschnitt betrachtet, im Wesentlichen Ω-förmig ausgebildet. Dadurch wird erreicht, dass der Dichtring 3 in die durch die Ω-Form gebildete Hinterschneidung des Stützkörpers 1 einschnappt bzw. durch den Herstellprozess aufgeformt wird. Diese Aufformung kann beispielsweise durch einen Spritzgießvorgang erfolgen.

Der Stützschenkel 2 erstreckt sich nahezu bis zur Oberfläche des Dichtrings 3, die dem dynamisch abzudichtenden ersten Maschinenelement 7 zugewandt ist. Bei Druckbeaufschlagung des Dichtrings 3 wird dieser dadurch vor unerwünscht großen Verformungen geschützt. Daraus resultiert ein gutes Abdichtungsergebnis während einer langen Gebrauchsdauer.

Eine geringe Anpresskraft gegen die abzudichtende Fläche 6 des ersten Maschinenelements 7 und daraus resultierend eine geringe Reibung wird dadurch erreicht, dass die Dichtlippen 4, 5 des Dichtrings 3 durch die nichtgebundene Festlegung am Stützkörper 1 in radialer Richtung gut beweglich sind. Herstellungs- und/oder montagebedingte Toleranzen sowie Druckstöße, werden dadurch gut ausgeglichen.

Die Dichtung ist in allen Ausführungsbeispielen symmetrisch zu der gedachten Radialebene 12 ausgebildet, die die Dichtung axial mittig durchschneidet. Die Dichtung kann aber anwendungsspezifisch auch asymmetrisch ausgeführt werden.

In Fig. 1 ist eine dynamisch innen dichtende Variante gezeigt. Der Stützkörper 1 ist in das zweite Maschinenelement 15, das als Gehäuse ausgebildet ist, eingepresst. Die dynamische Abdichtung erfolgt auf der Oberfläche 6 des ersten Maschinenelements 7, das durch einen Ventilschieber gebildet ist.

Fig. 2 unterscheidet sich von dem Ausführungsbeispiel aus Fig. 1 dadurch, dass hier die dynamisch außen dichtende Variante gezeigt ist. Das zweite Maschinenelement 15 ist in diesem Ausführungsbeispiel durch den Ventilschieber gebildet, das erste Maschinenelement 7, das die abzudichtende Fläche .6 aufweist, vom Ventilgehäuse.

In Fig. 3 ist ein drittes Ausführungsbeispiel gezeigt, das dem Ausführungsbeispiel aus Fig. 1 ähnlich ist. Der Stützkörper 1 ist abweichend gestaltet. Der Stützschenkel 2 des Stützkörpers 1 weist mehrere Ausnehmungen 10 auf, die gleichmäßig in Umfangsrichtung verteilt angeordnet sind sowie eine Oberflächenprofilierung 11, die den Stützschenkel 2 überdeckt. Durch diese Ausgestaltungen wird eine unerwünschte Relativverformung/verschiebung zwischen dem Stützkörper 1 und dem Dichtring 3 verhindert.

Außerdem weist der Stützkörper 1 auf der dem Dichtring 3 radial abgewandten Seite eine erste Profilierung 13 auf, die formschlüssig mit einer kongruent gestalteten zweiten Profilierung 14 des die Dichtung aufnehmenden zweiten Maschinenelements 15, hier in Form eines Ventilgehäuses, in Eingriff bringbar ist. Die erste 13 und zweite Profilierung 14 dienen als Positionierungseinrichtung. Schnappt der Stützkörper 1 mit seiner ersten Profilierung in die zweite Profilierung 14 des zweiten Maschinenelements 15 ein, ist die Montage abgeschlossen. Positionierungsfehler der Dichtung in der Dichtungsanordnung sind dadurch auf ein Minimum reduziert.

Zusätzlich oder alternativ sind der Stützkörper 1 und das zweite Maschinenelement 15 durch die Presspassung 17 verbunden.

Die Einzelheiten x und y sind, um Details besser zu erkennen, vergrößert dargestellt.

## Patentansprüche

1. Dichtung, umfassend einen im Wesentlichen T-förmigen Stützkörper (1) aus zähhartem Werkstoff mit einem sich in radialer Richtung erstreckenden Stützschenkel (2) und einen kongruent gestalteten Dichtring (3) aus elastomerem Werkstoff, der den Stützschenkel (2) anliegend umschließt und auf der dem Stützkörper (1) radial abgewandten Seite zumindest eine dynamisch beanspruchte Dichtlippe (4) aufweist, **dadurch gekennzeichnet, dass** der Stützkörper (1) und der Dichtring (3) ungebunden kraft- und/oder formschlüssig miteinander verbunden sind.

2. Dichtung nach Anspruch 1, **dadurch gekennzeichnet, dass** der Dichtring (3), im Längsschnitt betrachtet, axial beiderseits des Stützschenkels (2) jeweils eine Dichtlippe (4, 5) aufweist, die von einer abzudichtenden Fläche (6) eines dynamisch abzudichtenden ersten Maschinenelements (7) dichtend berührbar sind.

3. Dichtung nach Anspruch 2, **dadurch gekennzeichnet, dass** die Dichtlippen (4, 5) einander mit axialem Abstand benachbart zugeordnet sind und dass der durch den Abstand gebildete Spalt (8) als Schmiermitteldepot (9) ausgebildet ist.

4. Dichtung nach einem der Ansprüche 1 bis 3, **dadurch gekennzeichnet, dass** der Stützschenkel (2), im Längsschnitt betrachtet, im Wesentlichen Ω-förmig ausgebildet ist.

5. Dichtung nach einem der Ansprüche 1 bis 4, **dadurch gekennzeichnet, dass** der Stützschenkel (2) sich in axialer Richtung erstreckende Ausnehmungen (10) aufweist, die in Umfangsrichtung verteilt angeordnet sind.

6. Dichtung nach einem der Ansprüche 1 bis 5, **dadurch gekennzeichnet, dass** der Stützschenkel (2) zumindest teilweise von einer Oberflächenprofilierung (11) überdeckt ist.

7. Dichtung nach einem der Ansprüche 1 bis 6, **dadurch gekennzeichnet, dass** der Stützkörper (1) den Dichtring (3) radial außenseitig umschließt.

8. Dichtung nach einem der Ansprüche 1 bis 6, **dadurch gekennzeichnet, dass** der Stützkörper (1) radial außenseitig vom Dichtring (3) umschlossen ist.

9. Dichtung nach einem der Ansprüche 1 bis 8, **dadurch gekennzeichnet, dass** diese, bezogen auf eine axial mittig angeordnete gedachte Radialebene (12) symmetrisch ausgebildet ist.

10. Dichtung nach einem der Ansprüche 1 bis 9, **dadurch gekennzeichnet, dass** der Stützkörper (1) auf der dem Dichtring (3) radial abgewandten Seite eine erste Profilierung (13) aufweist, die formschlüssig mit einer kongruent gestalteten zweiten Profilierung (14) eines die Dichtung aufnehmenden zweiten Maschinenelements (15) in Eingriff bringbar ist.

11. Dichtungsanordnung, umfassend eine Dichtung nach einem der Ansprüche 1 bis 10, zur Abdichtung eines radialen Dichtspalts (16) zwischen dem ersten (7) und dem zweiten Maschinenelement (15), wobei der Stützkörper (1) und das zweite Maschinenelement (15) durch eine Presspassung (17) verbunden sind.

## Claims

1. Seal, comprising a substantially T-shaped supporting component (1) of tough material with a supporting leg (2), extending in the radial direction, and a congruently formed sealing ring (3) of elastomeric material, which encloses and lies against the supporting leg (2) and has on the side facing radially away from the supporting component (1) at least one dynamically loaded sealing lip (4), **characterized in that** the supporting component (1) and the sealing ring (3) are connected to each other in an unbonded manner by a force fit and/or form fit.

2. Seal according to Claim 1, **characterized in that,** when viewed in longitudinal section, the sealing ring (3) has a sealing lip (4, 5) on each of both sides axially of the supporting leg (2), which lips can be contacted in a sealing manner by a surface (6) to be sealed of a first machine element (7) that is to be dynamically sealed.

3. Seal according to Claim 2, **characterized in that** the sealing lips (4, 5) are assigned to one another such that they are adjacent with an axial spacing and **in that** the gap (8) formed by the spacing is designed as a lubricant depot (9).

4. Seal according to one of Claims 1 to 3, **characterized in that**, when viewed in longitudinal section, the supporting leg (2) is of a substantially Ω-shaped form.

5. Seal according to one of Claims 1 to 4, **characterized in that** the supporting leg (2) has clearances (10), which extend in the axial direction and are arranged such that they are distributed in the circumferential direction.

6. Seal according to one of Claims 1 to 5, **characterized in that** the supporting leg (2) is at least partially covered over by a surface profiling (11).

7. Seal according to one of Claims 1 to 6, **characterized in that** the supporting component (1) encloses the sealing ring (3) radially on the outside.

8. Seal according to one of Claims 1 to 6, **characterized in that** the supporting component (1) is enclosed radially on the outside by the sealing ring (3).

9. Seal according to one of Claims 1 to 8, **characterized in that** it is symmetrically formed with respect to an imaginary radial plane (12) arranged axially centrally.

10. Seal according to one of Claims 1 to 9, **characterized in that** the supporting component (1) has on the side facing radially away from the sealing ring (3) a first profiling (13), which can be brought into engagement with a form fit with a congruently formed second profiling (14) of a second machine element (15) receiving the seal.

11. Sealing arrangement, comprising a seal according to one of Claims 1 to 10, for sealing a radial sealing gap (16) between the first machine element (7) and the second machine element (15), the supporting component (1) and the second machine element (15) being connected by a press fit (17).

## Revendications

1. Joint d'étanchéité, comprenant un corps d'appui (1) prenant pour l'essentiel une forme en T et fabriqué à partir d'un matériau dur avec un bord d'appui (2) s'étendant dans la direction radiale et une bague d'étanchéité (3) coïncidente en matériau élastomère qui entoure par appui le bord d'appui (2) et comporte sur le côté opposé dans le plan radial par rapport au corps d'appui (1) au moins une lèvre d'étanchéité (4) à sollicitation dynamique, **caractérisé en ce que** le corps d'appui (1) et la bague d'étanchéité (3) entourés sont reliés entre eux par complémentarité de formes et/ou de forces.

2. Joint d'étanchéité selon la revendication 1, **caractérisé en ce que** la bague d'étanchéité (3), vue en coupe longitudinale, comporte dans le plan axial, des deux côtés du bord d'appui (2), respectivement une lèvre d'étanchéité (4, 5), lesdites lèvres pouvant être touchées de façon étanchéifiante par une fiche (6) à étanchéifier d'un premier élément de machine (7) dynamique à étanchéifier.

3. Joint d'étanchéité selon la revendication 2, **caractérisé en ce que** les lèvres d'étanchéité (4, 5) sont associées l'une à autre de façon connexe à une certaine distance axiale l'une de l'autre et que la fente (8) formée par cette distance prend la forme d'un dépôt de lubrifiant (9).

4. Joint d'étanchéité selon l'une quelconque des revendications 1 à 3, **caractérisé en ce que** le bord d'appui (2), vu en coupe longitudinale, est réalisé pour l'essentiel en forme de Ω.

5. Joint d'étanchéité selon l'une quelconque des revendications 1 à 4, **caractérisé en ce que** le bord d'appui (2) comporte des évidements (10) s'étendant dans la direction axiale et disposés de façon répartie dans la direction circonférentielle.

6. Joint d'étanchéité selon l'une quelconque des revendications 1 à 5, **caractérisé en ce que** le bord d'appui (2) est au moins recouvert en partie par un profilé de surface (11).

7. Joint d'étanchéité selon l'une quelconque des revendications 1 à 6, **caractérisé en ce que** le corps d'appui (1) entoure la bague d'étanchéité (3) sur le côté extérieur dans le plan radial.

8. Joint d'étanchéité selon l'une quelconque des revendications 1 à 6, **caractérisé en ce que** le corps d'appui (1) est entouré sur le côté extérieur dans le plan radial par la bague d'étanchéité (3).

9. Joint d'étanchéité selon l'une quelconque des revendications 1 à 8, **caractérisé en ce qu'**il est réalisé de façon symétrique par rapport à un plan radial (12) imaginaire disposé de façon centrale dans le plan axial.

10. Joint d'étanchéité selon l'une quelconque des revendications 1 à 9, **caractérisé en ce que** le corps d'appui (1) comporte sur le côté opposé dans le plan radial à la bague d'étanchéité (3) un premier profilé (13) qui peut être amené en prise, par complémentarité de formes, avec un deuxième profilé (14) coïncident d'un deuxième élément de machine (15) logeant le joint d'étanchéité.

11. Agencement d'étanchéité, comprenant un joint d'étanchéité selon l'une quelconque des revendications 1 à 10, pour étanchéifier une fente d'étanchéité (16) radiale située entre le premier (7) et le deuxième élément de machine (15), le corps d'appui (1) et le deuxième élément de machine (15) étant reliés entre eux par un ajustage serré (17).
